# EUROPÄISCHE PATENTANMELDUNG

(11) **EP 1 736 055 A2**
(43) Veröffentlichungstag der Anmeldung: **27.12.2006**
(21) Anmeldenummer: 06012149.8
(22) Anmeldetag: 13.06.2006
(51) Int. Cl.: A21C 9/06

(54) **Maschine zur Herstellung von Teigtaschen**

(30) Priorität: 20.06.2005 IT BZ20050032
(71) Anmelder: Niederkofler, Franz, 39012 Merano BZ (IT)
(72) Erfinder: Niederkofler, Franz, 39012 Merano BZ (IT)
(74) Vertreter: Oberosler, Ludwig

(57) **Zusammenfassung**

Maschine zur Herstellung von Teigtaschen und dergleichen welche Auswalzzylinder (2) für die Kalibrierung eines vorgewalzten Teiges (4) oder für das Auswalzen und die Kalibrierung einer Teigmasse, eine eventuelle Station zur Aufbringung der Fülle auf den Teig und Walzen (7, 8) für die Ausformung von Teigtaschen (T) und dergleichen umfasst, wobei die kalibrierte Teigbahn (6) welche zwischen den Zylindern (2) des Teigwalzwerkes austritt, horizontal ausgebreitet vorliegt um anschließend, unter immer horizontaler Fortbewegung aber mit den Längsrändern in vertikaler Position und mit gegenseitig, durch Falten der Teigbahn (6) gemäß der Längs-Mittellinie, anliegenden Längsrändern, zwischen den Formwalzen (7, 8) mit zueinander parallelen und vertikalen Drehachsen eingeführt wird.

## Beschreibung

Es sind für die Herstellung von Teigtaschen oder dergleichen die Verwendung von eigenen Schneidstempeln und von spezifischen Nudelhölzern welche mit Formhohlräumen versehen sind bekannt; wenn auch diese Werkzeuge eine Steigerung der handwerklichen Herstellung und eine gleichmäßigere und einförmigere Ausformung ermöglichen, erfordert deren Einsatz eine gewisse Erfahrung; diese Werkzeuge erleichtern zwar die Herstellung, vermindern jedoch bei größeren Herstellungsmengen kaum die Mühe.

Es sind Maschinen zur Herstellung von Teigtaschen und dergleichen bekannt welche wesentlich aus Beschickungsvorrichtungen für den Teig und für die Fülle, aus Formungsvorrichtungen und aus Vorrichtungen für die Endbearbeitung und für die Verpackung der Teigtaschen bestehen.
Die Formungsvorrichtungen für die Teigtaschen bestehen allgemein aus einer Reihe von Füllstößel, aus Schneidstempel für den ausgerollten Teig welche konische Form haben um mit den Formhohlräumen einer Matrize, zwecks Ausschneiden von Teigplätzchen, zusammenzuarbeiten, aus Walzenpaaren welche verschiedene Formhohlräume aufweisen und eventuell aus gerändelten Ringformen welche geeignet sind die, mit Fülle versehenen Teigstücke zu falten und längs den Rändern zu verbinden um die Teigtaschen zu formen welche anschließend zur Endbearbeitung weitergeleitet werden.

Um die durch Quetschen verschlossenen Teigtaschen herzustellen werden die Teigstücke gefaltet und dem Rand entlang durch Druckbacken oder Druckstäbe welche mit einer, aus einer schräg gestellten Auflagefläche bestehenden, Konsole zusammenwirken welche mit einem Anschlagblech versehen ist, welches die Teigtaschen während des Quetschvorganges zurückhält; dieses Anschlagblech wird anschließend nach unten bewegt um die Konsole durch Abrutschen der Teigtaschen frei zu machen. Insbesondere die Endbearbeitungsvorrichtungen erhöhen die Komplexität der Maschinen weswegen diese nur für die industrielle Fertigung von Teigtaschen und dergleichen geeignet ist.

Die Erfindung stellt sich die Aufgabe eine Maschine zur handwerklichen Herstellung von Teigtaschen und dergleichen zu schaffen welche eine einfache Konstruktion aufweist, wenig Platz einnimmt, nicht schwer ist, einfach und schnell zu montieren und zu reinigen ist, welche für den Einsatz in Küchen mittel-kleiner Restaurants und Gasthäuser geeignet ist und welche die Herstellung von Teigtaschen mit gleichmäßiger Form und einheitlichem Aussehen ermöglicht ohne dass dabei der Bediener der Maschine zu sehr belastet wird.

Zur Lösung dieser Aufgabe schlägt die Erfindung eine Maschine zur Herstellung von Teigtaschen vor, deren halbmondförmige Beschaffenheit aus einem einzigen zusammengefaltetem Teigband mit händischem oder halbautomatischem Aufbringen der Taschenfüllung entsteht; die Maschine kann mit einem Halter für eine Rolle ausgewalzten vorgefertigten Teiges und mit einem einfachen bekannten Teigwalzwerk ausgerüstet sein um das Teigband in der gewünschten Stärke auszuwalzen und dem Taschenformwerk zuzuführen. Die Erfindung schließt nicht aus, dass der Teig durch ein bekanntes, über Kurbel oder Motor angetriebenes Teigwalzwerk in der gewünschten Stärke ausgewalzt wird.

Die Formgebung für die Teigtaschen erfolgt erfindungsgemäß mittels zwei Walzen welche zueinander parallele vertikale Drehachsen aufweisen und zueinander, sowie im Verhältnis zum Teigwalzwerk, synchron angetrieben werden indem die Übertragung der Drehbewegung von den Zylindern des Teigwalzwerkes auf die Formwalzen erfolgt. Eine der Formwalzen weist z.B. zwei Formhohlräume auf, an welchen ein vorstehender bogenförmiger Quetschrand vorgesehen ist welcher im oberen Bereich einen weiteren, mehr vorstehenden, Rand aufweist welcher parallel zum Quetschrand verläuft, scharfkantig ist und gegen die zweite Walze vorsteht um das bogenförmige Ausschneiden der Teigtasche, außerhalb des Quetschrandes, durchzuführen. Die zweite Walze, deren Durchmesser z.B. gleich dem Radius der ersten Walze sein kann, dient als Auflagewalze gegen welche der Quetschrand und der Schneidrand, während des Durchlaufes des zusammengefalteten Teiges, wirkt um die zwei Teigschichten entlang dem Quetschrand zu komprimieren und entlang dem Schneidrand zu schneiden und so eine vollständig vom Teigrandabfall getrennte Teigtasche zu erhalten.

Die so erhaltene Teigtasche wird halbmondförmig sein und einen bogenförmig gequetschten Rand aufweisen welcher aus zwei überlagerten Teigschichten besteht, während der wesentlich geradlinige Rand aus einer einzigen Teigschicht besteht. Die Form des, die Fülle enthaltenden, Bereiches wird von der Beschaffenheit der Hohlraumes an der Formwalze bestimmt.

Vorteilhafterweise weist die Formwalze zwei Formhohlräume auf welche, sich gegenüberliegend, angeordnet sind, es wird jedoch eine andere Anzahl von Formhohlräumen nicht ausgeschlossen.

Um die geformten und geschnittenen Teigtaschen jenseits des Bereiches der Formwalzen zu befördern ist mindestens an einer dieser, vorzugsweise an der Auflagewalze, am unteren Ende ein horizontal vorstehender Rand vorgesehen welcher eine Rändelung oder vorstehende Rippen aufweist.
Natürlich müssen die beiden Formwalzen sich mit gleicher Umfangsgeschwindigkeit drehen und die Fördergeschwindigkeit des Teiges zwischen der Formwalze und der Auflagewalze muss gleich oder leicht höher als die Geschwindigkeit am Austritt des Teiges aus dem Teigwalzwerk sein; in diesem letzteren Fall wird eine leichte Spannung des Teiges und somit eine leichte Streckung des Teiges erreicht; dieser wird von einer horizontalen flachen Position am Austritt des Teigwalzwerkes in eine fortlaufend stärker angewinkelte, gemäß der Längserstreckung gefalteten Position übergeführt, wobei die beiden Längsränder sich überdecken und der Teig in vertikaler gefalteter Position zwischen die Form- und Auflagewalze geführt wird. Die Portion der Fülle wird in einem Bereich unmittelbar vor dem Formwalzenpaar direkt auf den Teig aufgebracht welcher bereits mit den Seitenrändern angewinkelt sich den Formwalzen nähert um zwischen diesen anschließend in vertikaler Position und mit sich berührenden Längsrändern zwischen die Form- und die Auflagewalze eingeführt wird.
Aus Gründen der Sicherheit und der Hygiene können die Formwalzen mit einem leicht abmontierbarem und reinigbarem Mantel versehen sein, auch die Walzen selbst sind leicht abmontierbar und austauschbar.

Die Fülle der Teigtaschen kann über einen senkrecht angeordneten Füllstutzen aufgebracht werden. Vorteilhafterweise wird das Falten der Teigbahn durch seitliche Leitsprossen und/oder Leitbleche eingeleitet. Zwei senkrechte, zueinander parallele Leitsprossen können rohrförmig sein und als Halterung für den Füllstutzen dienen welcher, mit entsprechenden Zapfen ausgestattet, in diese Rohre von oben abnehmbar eingesteckt werden kann. Um den Teig im Füllbereich und anschließend beim Einleiten zwischen die Formrollenzu unterstützen, können weitere Leitsprossen und/oder Leitbleche vorgesehen sein. Natürlich können die Leitsprossen und/oder die Leitbleche alle oder teilweise dadurch ersetzt werden dass die obere Deckplatte der Maschine entsprechend ausgeformt ist.
An der Auflagewalze kann ein Abstreiferelement vorgesehen sein um daran haftende Mehl- und Teigreste abzuschaben.

Die Erfindung wird anschließend anhand eines vorzuziehenden Ausführungsbeispieles einer erfindungsgemäßen, in den beigelegten Zeichnungen schematisch dargestellten, Maschine zur Herstellung von Teigtaschen näher erklärt; dabei erfüllen die Zeichnungen rein erklärenden, nicht beschränkenden Zweck.

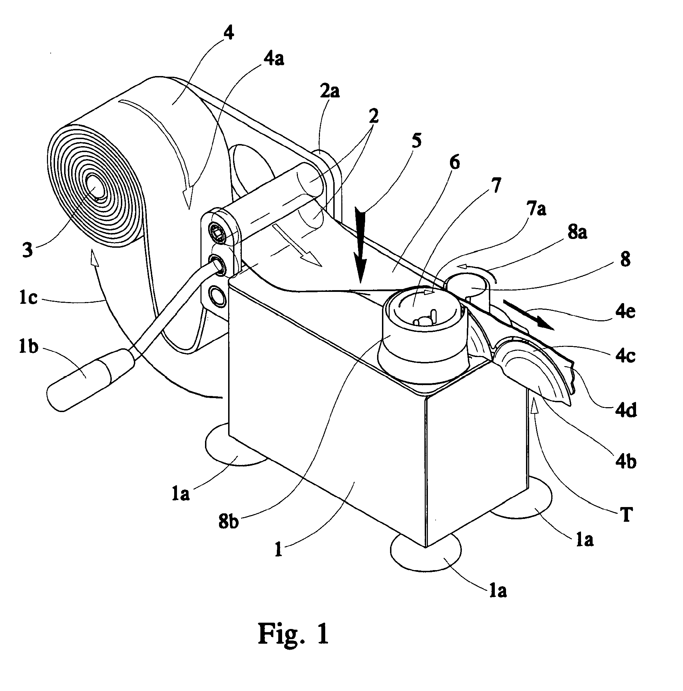

Die Fig. 1 zeigt in perspektivischer Darstellung eine erfindungsgemäße Maschine zur Herstellung von Teigtaschen welche durch eine Rolle vorgewalzten Teiges gespeist wird welcher durch ein einfaches, bekanntes, mittels Kurbel angetriebenes, Teigwalzwerk weiter ausgewalzt und kalibriert wird und anschließend durch den Durchlauf zwischen zwei Formwalzen mit vertikaler Drehachse in Längsrichtung gefaltet wird, wobei diese Walzen di Formung, die Quetschung und das Schneiden der Teigtaschen ausführen; das Aufbringen der Füllung ist durch einen vertikalen Pfeil dargestellt.

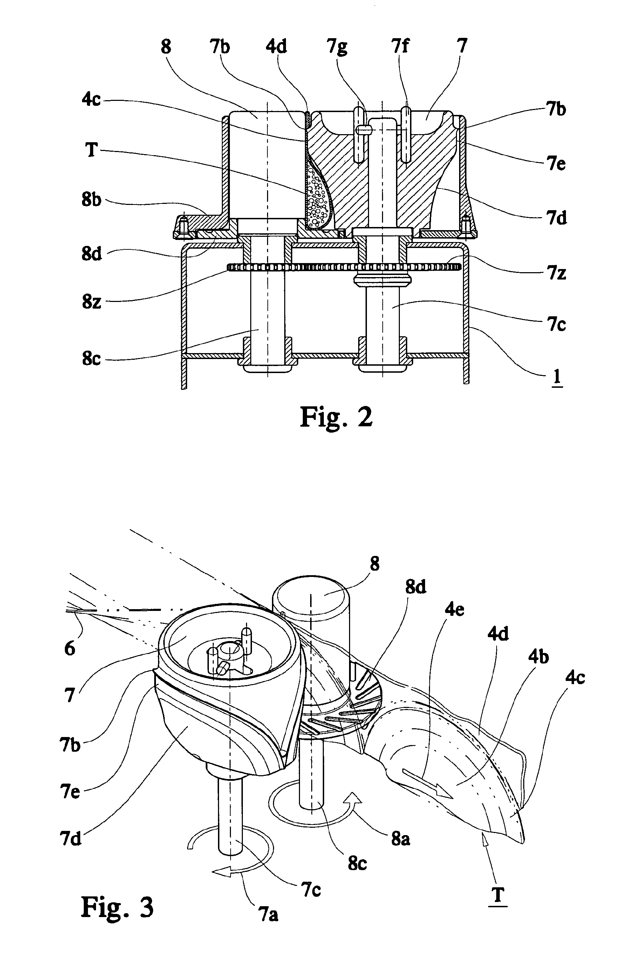

Die Fig. 2 zeigt die Formwalzen in Schnittdarstellung gemäß einer Schnittebene welche die Drehachsen beider Walzen enthält; zwischen den Walzen ist eine Teigtasche während der Ausformung im Schnitt dargestellt.

Die Fig. 3 zeigt in perspektivischer Darstellung die Formwalzen für die Ausformung der Teigtaschen ohne Abdeckung, wobei der Durchlauf des Teiges durch dünne und strichlierte Linien angedeutet ist.

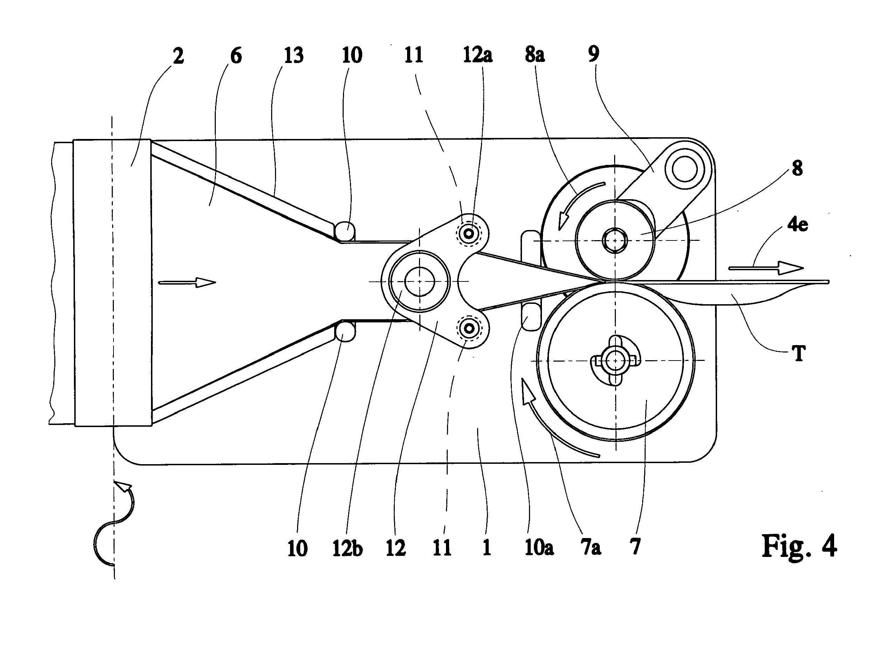

Die Fig. 4zeigt die Draufsicht auf eine erfindungsgemäße Maschine zur Herstellung von Teigtaschen mit Auflageblech und Leitsprodden für die Teigführung und mit einem durch zwei Leitsprossen gehalterten abnehmbaren Füllstutzen.

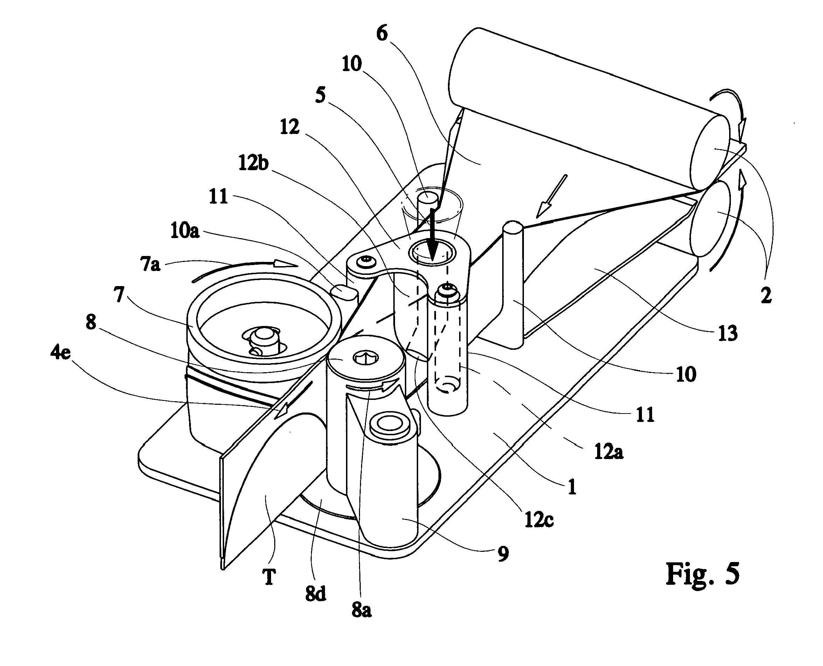

Die Fig. 5 zeigt die selbe, in Fig. 4 dargestellte Maschine in perspektivischer Darstellung.

Die Maschine zur Herstellung von Teigtaschen und dergleichen besteht erfindungsgemäß aus einem Gehäuse 1 mit Füßchen 1 a in welchem Zahnräder für die Übertragung der Bewegung der Zylinder 2 eines Teigwalzwerkes auf die vertikalen Wellen 7c, 8c einer Formwalze 7 und einer Auflagewalze 8 und eventuell ein Elektromotor untergebracht. Außer dem Antrieb der Maschine über Handkurbel 1 b mit Übertragung 2a der Bewegung von den Zylindern 2 des Teigwalzwerkes auf die Formwalze 7 und auf die Auflagewalze 8, besteht erfindungsgemäß die Möglichkeit z.B. am Teigwalzwerk 2 einen bekannten Motorantrieb vorzusehen.

Vorteilhafterweise wird die Maschine durch vorgewalzten Teig gespeist welcher als Rolle 4 an einem horizontalen, parallel zu den Zylindern 2 des Teigwalzwerkes verlaufenden, Zapfen 3 aufgebracht wird, ohne jedoch auszuschließen dass, an Stelle des einfachen Teigwalzwerkes, ein komplexeres bekanntes Walzwerk angebracht wird welches den Teig bereits kalibriert und für die Formung der Teigtaschen T geeignet herstellt.

Die Ausformung, das Quetschen und das Schneiden der Teigtaschen T erfolgt durch die beiden Walzen 7, 8 mit vertikalen, zueinander parallelen, Drehachsen welche oberhalb am Gehäuse 1 angeordnet sind und teilweise durch eine abnehmbare Abdeckung 8b geschützt sind. Während die Formwalze 7 außen in zueinander entgegengesetzten Bereichen zwei Formhohlräume 7d mit vorstehendem Quetschrand 7e und Schneidrand 7b aufweist, weist die Auflagewalze 8 eine glatte Mantelfläche und im unteren Bereich einen horizontal vorspringenden Rand 8d auf welcher an der Oberseite vorstehende Mitnehmerrippen aufweist. Die Walzen 7, 8 sind leicht abnehmbar an den vertikalen entsprechenden senkrechten Wellen 7c, 8c angebracht welche ihrerseits über Zahnräder 7z, 8z untereinander in Verbindung stehen so dass deren Drehung 7a, 8a synchron erfolgt und die Walzen 7, 8 sich mit der selben Umfangsgeschwindigkeit drehen.

Die an einem der Zylinder 2 des Teigwalzwerkes durch die Handkurbel 1 b übertragene Bewegung 1 c wird über Zahnräder unter der Abdeckung 2a weitergeleitet und, z.B. über Kegelzahnräder, auf eine der Wellen 7c, 8c der Walzen 7, 8 übertragen.

Erfindungsgemäß kann an Stelle der Handkurbel 1 b ein bekannter und für Teigwalzwerke angebotener Elektromotor mit Untersetzungsgetriebe angebracht werden. Weiters kann der Antriebsmotor innerhalb des Gehäuses 1 vorgesehen werden und mittels bekannter Übertragungselemente auf die Zylinder 2 des Teigwalzwerkes und auch auf die Walzen 7, 8 übertragen werden.

Durch Drehen der Zylinder 2 des Teigwalzwerkes wird der vorgewalzte Teig von der am Zapfen 3 aufgesteckten Teigrolle 4 abgewickelt 4a und auf eine einstellbare Stärke für die Herstellung der Teigtaschen T kalibriert. Die kalibrierte, horizontal ausgebreitete Teigbahn 6 wird anschließend, in Längsrichtung zusammengefaltet, so dass die Längsränder gegeneinander anliegend, in vertikaler Position aber immer in horizontaler Richtung weitergeleitet werden und zwischen die Formwalze 7 und die Auflagewalze 8, welche sich in entgegengesetzter Richtung drehen 7a, 8a, eingeführt.

Um den Teig von der horizontal ausgebreiteten Lage in eine vertikale, gemäß der Längsmittellinie gefaltete Lage zu überführen wird diese im Bereich nach den Zylindern 2 des Teigwalzwerkes durch ein Auflageblech 13 unterstützt und anschließend durch erste vertikale Leitsprossen 10, den Längsrändern entlang, umgeleitet. Nach diesen ersten Leitsprossen 10 folgt ein zweites Sprossenpaar 11; diese Sprossen sind rohrförmig um die Zapfen 12 welche von der Halteplatte 12 des Füllstutzens 12b abstehen aufnehmen zu können. Die Fülle wird von oben In den Füllstutzen 12b gedrückt 5 um an der unteren Austrittsöffnung 12 c zwischen den Teigwänden auszutreten. Der befüllte Teig wird anschließend durch eine oder mehrere weitere Sprossen 10a unterstützt. Die Leitsprossen können teilweise oder vollständig von Leitblechen ersetzt werden, bzw. kann die Deckplatte der Maschine entsprechend ausgeformt sein.

Im Bereich unmittelbar vor dem Eintritt zwischen den beiden Walzen 7, 8 werden auf den Teig, deren Ränder in Faltfase nach oben angewinkelt sind, die Portionen der Füllung der zu formenden Teigtaschen T von Hand, mit oder ohne Befüllungsvorrichtung aufgebracht 5.
Während des Durchlaufes zwischen den Walzen 7, 8 des kalibrierten und gefalteten Teiges 6 welcher die Füllung enthält, wird der Teig zuerst durch den unteren vorstehenden Quetschrand 7e gequetscht während praktisch gleichzeitig auch das Schneiden des gequetschten Teiges durch den vorstehenden scharfkantigen Schneidrand 7b beginnt. Durch die gleichmäßige Fortbewegung 4e des Teiges samt der Fülle, erfolgt durch den an der Walze 7 vorgesehenen Formhohlraum 7d die Ausformung des, die Fülle enthaltenden Bereiches 4b und gleichzeitig das Quetschen und Ausschneiden des gesamten bogenförmigen Randes 4c der Teigtasche T welche über den Bereich der Walzen 7, 8, durch die Drehung des horizontal vorstehenden Randes 8d hinausbefördert werden. Der Abfallrand 4d kann anschließend zusammengeknetet werden und die so erhaltene Masse kann erneut zu Teigbahnen ausgewalzt werden.

Erfindungsgemäß kann der Quetschrand 7e mit einer Rändelung versehen sein, der Schneidrand 7b kann so geformt sein dass z.B. eine gezahnte Schnittlinie entsteht.

An der Auflagewalze 8 kann, im Falle einer glatten oder wenig profilierten Mantelfläche, ein abnehmbares Abstreifelement 9 vorgesehen sein welches die Walze 8 von Mehl und Teigresten säubert.

Die Quetschline und die Schnittlinie können auch unterschiedlichen Verlauf haben so dass die Möglichkeit besteht Teigtaschen mit unterschiedlicher Form, z.B. halbmondförmig mehr oder weniger in die Länge gezogen, oder auch quadratisch, rechteckig oder trapezförmig, herzustellen. Erfindungsgemäß kann auch die Auflagewalze 8 einen Formhohlraum aufweisen, in diesem Fall wird der Formhohlraum 7d an der Formwalze 7 weniger stark ausgeprägt sein; die Teigtaschen T werden somit an beiden Seiten eine Ausbuchtung aufweisen, diese Ausbuchtungen können symmetrisch sein wenn die Formhohlräume an den beiden Walzen 7, 8 identisch sind.

Gemäß einer Weiterentwicklung der Erfindung kann das Aufbringen der Fülle halbautomatisch erfolgen indem im entsprechenden Bereich ein Behälter für die Füllmasse vorgesehen wird und dieser Behälter mit einem Dosier- oder Verteilermechanismus ausgestattet ist welcher von Hand oder automatisch, synchron mit der Fortbewegung des Teiges 6, betätigt wird. Behälter mit Dosier- oder Verteilermechanismen sind für das Garnieren oder Befüllen an Maschinen zur Lebensmittelfertigung, insbesondere in der Süßwarenindustrie, bekannt.

## Patentansprüche

1. Maschine zur Herstellung von Teigtaschen und dergleichen welche Auswalzzylinder (2) für die Kalibrierung eines vorgewalzten Teiges (4) oder für das Auswalzen und die Kalibrierung einer Teigmasse, eine eventuelle Station zur Aufbringung der Fülle auf den Teig und Walzen (7, 8) für die Ausformung von Teigtaschen und dergleichen umfasst, **dadurch gekennzeichnet, dass** die kalibrierte Teigbahn (6) welche zwischen den Zylindern (2) des Teigwalzwerkes austritt, horizontal ausgebreitet vorliegt um anschließend, unter immer horizontaler Fortbewegung aber mit den Längsrändern in vertikaler Position und mit gegenseitig, durch Falten der Teigbahn (6) gemäß der Längs-Mittellinie, anliegenden Längsrändern, zwischen den Formwalzen (7, 8) mit zueinander parallelen und vertikalen Drehachsen eingeführt wird.

2. Maschine zur Herstellung von Teigtaschen und dergleichen gemäß Anspruch 1, **dadurch gekennzeichnet, dass** die Ausformung der Teigtaschen (T) durch den kontinuierlichen Durchlauf (4e) der gefalteten, die Füllung enthaltende, Teigbahn (6) zwischen der Formwalze (7) welche mindestens einen Formhohlraum (7d), einen Quetschrand (7e) mit einem vorstehenden scharfkantigen Schneidrand aufweist, erfolgt, wobei diese Ränder (7e, 7b) den seitlichen und oberen Bereich des Formhohlraumes (7d) bestimmen und dass die Auflagewalze (8) zylindrische Form mit glatter Mantelfläche hat an welcher die Schneide des Schneidrandes (7b) der Formwalze (7) anliegt.

3. Maschine zur Herstellung von Teigtaschen und dergleichen gemäß den Ansprüchen 1 und 2, **dadurch gekennzeichnet, dass** entsprechend den Formhohlräumen (7d) welche an der Formwalze (7) vorgesehen sind, auch an der Auflagewalze (8) Formhohlräume vorgesehen sind welche, in Bezug auf die Formhohlräume an der Formwalze (7), identische oder unterschiedliche Form aufweisen können.

4. Maschine zur Herstellung von Teigtaschen und dergleichen gemäß den Ansprüchen 1 und 2, **dadurch gekennzeichnet, dass** der Quertschrand (7e) eine glatte oder eine gerändelte Oberfläche aufweisen kann.

5. Maschine zur Herstellung von Teigtaschen und dergleichen gemäß den Ansprüchen 1 und 2, **dadurch gekennzeichnet, dass** der Verlauf der Schnittkante (7b) einförmig linear oder gezahnt sein kann.

6. Maschine zur Herstellung von Teigtaschen und dergleichen gemäß den Ansprüchen 1 und 2, **dadurch gekennzeichnet, dass** eine der Walzen (7, 8) für die Ausformung der Taschen (T) im Bereich der unteren Grundfläche mit einem horizontal abstehenden Rand (8d) versehen ist welcher Mitnehmerrippen aufweist.

7. Maschine zur Herstellung von Teigtaschen und dergleichen gemäß den Ansprüchen 1 und 2, **dadurch gekennzeichnet, dass** der Quetschrand (7e) und der dazu wesentlich parallele Schneidrand (7b) einen Verlauf haben kann um, mehr oder weniger lang gezogene halbmondförmige, trapezförmige, rechteckförmige oder quadratische Teigtaschen (T) fertigen zu können, wobei jene Seite der Teigtasche (T) welche der "Sehne" des Halbmondes, der größeren Grundlinie des Trapezes oder der Grundlinie des Rechteckes oder des Quadrates entspricht vom Bereich der Falte des Teiges gebildet wird.

8. Maschine zur Herstellung von Teigtaschen und dergleichen gemäß Anspruch 1, **dadurch gekennzeichnet, dass** der Antrieb der Zylinder (2) des Teigwalzwerkes zusammen mit den Formwalzen (7, 8) über eine Handkurbel (1 b) welche an einem der Zylinder (2) angebracht ist erfolgt oder über einen Motor mit Untersetzungsgetriebe welcher mit einem der Übertragungselemente welche die Zylinder (2) des Teigwalzwerkes mit den Formwalzen (7, 8) mechanisch verbinden, erfolgt.

9. Maschine zur Herstellung von Teigtaschen und dergleichen gemäß den Ansprüchen 1 und 2, **dadurch gekennzeichnet, dass** die Teigbahn (6), im Bereich zwischen den Zylindern (2) des Teigwalzwerkes und den Formwalzen (7, 8), durch Auflagebleche (13) und Leitsprossen (10, 10a, 11) während der Überführung von der horizontalen ausgebreiteten Lage in die zusammengefaltete vertikale Lage unterstützt wird, dass die Leitsprossen (10, 10a, 11) vollständig oder teilweise von Leitblechen ersetzt werden können oder durch die entsprechende Ausformung der Deckplatte der Maschine ersetzt werden können.

10. Maschine zur Herstellung von Teigtaschen und dergleichen gemäß den Ansprüchen 1, 2 und 9, **dadurch gekennzeichnet, dass** an den Leitsprossen (11) oder an den entsprechenden Leitblechen, im Bereich vor den Formwalzen (7, 8), eine Halterung (12) für einen Füllstutzen (12b) abnehmbar befestigt oder aufgesteckt ist.
